(19) **Europäisches Patentamt**
**European Patent Office**
**Office européen des brevets**

(11) **EP 4 317 097 A1**

(12) **EUROPEAN PATENT APPLICATION**
published in accordance with Art. 153(4) EPC

(43) Date of publication:
**07.02.2024 Bulletin 2024/06**

(21) Application number: **22938743.6**

(22) Date of filing: **04.08.2022**

(51) International Patent Classification (IPC):
**C03C 13/00** (2006.01)   **D07B 1/02** (2006.01)
**D04H 3/004** (2012.01)

(52) Cooperative Patent Classification (CPC):
**C03C 3/078; C03C 3/085; C03C 3/087;**
**C03C 3/089; C03C 3/091; C03C 13/00;**
**D04H 3/004; D07B 1/02**

(86) International application number:
**PCT/JP2022/030028**

(87) International publication number:
**WO 2023/233677 (07.12.2023 Gazette 2023/49)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.05.2022 JP 2022088851**

(71) Applicant: **Nippon Sheet Glass Company, Limited**
**Minato-ku**
**Tokyo 108-6321 (JP)**

(72) Inventor: **NAKAMURA Aya**
**Tokyo 108-6321 (JP)**

(74) Representative: **Cabinet Beau de Loménie**
**158, rue de l'Université**
**75340 Paris Cedex 07 (FR)**

(54) **GLASS FIBER AND COMPOSITION FOR GLASS FIBER**

(57)    The present disclosure provides a glass fiber having a fiber diameter of 18 μm or less and including a glass composition. A MgO content in the glass composition is 15 mol% or more, and a common logarithm $\log\eta$ of a viscosity $\eta$ [dPa•s] of the glass composition at a devitrification temperature is 2.6 or more. The present disclosure also provides a glass composition which includes, in mol%: $SiO_2$ 50 to 65%; $Al_2O_3$ 5 to 26%; $B_2O_3$ 0 to 1.6%; MgO 15 to 30%; CaO 0 to 8%; $Li_2O$ 0 to 2.4%; and $Na_2O$ more than 0.2% and 2.85% or less and in which a sum of a $Li_2O$ content, a $Na_2O$ content, a $K_2O$ content is 0.3 to 3.0%, and a ratio of the $Na_2O$ content to this sum is 0.2 or more and 0.95 or less.

EP 4 317 097 A1

**Description**

TECHNICAL FIELD

The present invention relates to a glass fiber and a glass composition suitable for glass fibers.

BACKGROUND ART

Although many of glass fibers in practical use are made of glass compositions having a Young's modulus of 90 GPa or less, glass compositions having a Young's modulus of more than 90 GPa are also known. For example, Patent Literature 1 discloses a glass composition including a large amount of rare-earth oxides. The sum of the $Y_2O_3$ content and the $La_2O_3$ content in the glass composition of Patent Literature 1 is in the range of 20 to 60 weight%. However, a high rare-earth oxide content increases manufacturing cost. Taking this into account, Patent Literature 2 discloses a technique by which the Young's modulus of a glass composition is improved without a large amount of rare-earth oxides. The glass composition of Patent Literature 2 includes 15 to 30% MgO in mol% as a component for improving the Young's modulus.

CITATION LIST

Patent Literature

    Patent Literature 1: WO 2006/057405 A1
    Patent Literature 2: JP 6391875 B1

SUMMARY OF INVENTION

Technical Problem

It is difficult to spin a glass fiber having a small fiber diameter out of a glass composition containing 15 mol% or more MgO (referred to as "high-Mg glass" in this paragraph) as a component for improving Young's modulus. Even a high-Mg glass capable of being spun into a glass fiber having a relatively large fiber diameter causes a lot of manufacturing troubles when spun into a glass fiber having a small fiber diameter. A high-Mg glass is likely to experience devitrification within a nozzle for spinning a small-diameter glass fiber. It is therefore an object of the present invention to provide a new glass fiber having a high Young's modulus and a relatively small diameter. Another object of the present invention is to provide a glass composition suitable for glass fibers having a high Young's modulus and a relatively small diameter.

Solution to Problem

The present inventor conducted intensive studies on a devitrification mechanism in spinning a glass composition in which the MgO content is high, and have completed the present invention.
The present invention provides a glass fiber having a fiber diameter of 18 μm or less, the glass fiber including a glass composition, wherein

    a MgO content in the glass composition is 15% or more in mol%, and
    a common logarithm $\log\eta$ of a viscosity $\eta$ [dPa•s] of the glass composition at a devitrification temperature is 2.6 or more.

In another aspect, the present invention provides a glass composition for glass fibers, the glass composition including, in mol%:

|  |  |
|---|---|
| $SiO_2$ | 50 to 65%; |
| $Al_2O_3$ | 5 to 26%; |
| $B_2O_3$ | 0 to 1.6%; |
| MgO | 15 to 30%; |

(continued)

| | |
|---|---|
| CaO | 0 to 8%; |
| Li$_2$O | 0 to 2.4%; and |
| Na$_2$O | more than 0.2% and 2.85% or less, wherein |

a sum of a Li$_2$O content, a Na$_2$O content, and a K$_2$O content is 0.3 to 3.0%, and
a Na$_2$O ratio defined by a ratio of the Na$_2$O content to the sum of the Li$_2$O content, the Na$_2$O content, and the K$_2$O content is 0.2 or more and 0.95 or less.

In yet another aspect, the present invention provides a glass composition for glass fibers, including, in mol%:

| | |
|---|---|
| SiO$_2$ | 50 to 65%; |
| Al$_2$O$_3$ | 5 to 26%; |
| B$_2$O$_3$ | 0 to 1.6%; |
| MgO | 15 to 30%; |
| CaO | 0 to 8%; |
| Li$_2$O | 0% or more and less than 3%; and |
| Na$_2$O | more than 0.2% and less than 3%, wherein |

a common logarithm log$\eta$ of a viscosity $\eta$ [dPa•s] at a devitrification temperature is 2.6 or more.
In yet another aspect, the present invention provides a glass composition for glass fibers, wherein

a Young's modulus is 93 GPa or more,
a sum of a Li$_2$O content, a Na$_2$O content, and a K$_2$O content is 0.3 to 3.0% in mol%, and
a Na$_2$O ratio defined by a ratio of the Na$_2$O content to the sum of the Li$_2$O content, the Na$_2$O content, and the K$_2$O content is 0.2 or more and 0.95 or less in mol%.

Advantageous Effects of Invention

The present invention provides a new glass fiber having a high Young's modulus and a relatively small diameter. The present invention provides a new glass composition suitable for glass fibers having a high Young's modulus and a relatively small diameter.

DESCRIPTION OF EMBODIMENTS

Embodiments of the present invention will be described hereinafter. The following description is not intended to limit the present invention to particular embodiments. Herein, the content of every component in a glass composition below is in mol%, and mol% is basically represented by "%". Herein, being "substantially free of" a component means that the content of the component is less than 0.1 mol%, less than 0.05 mol%, less than 0.01 mol%, less than 0.005 mol%, even less than 0.003 mol%, or, in some cases, less than 0.001 mol%. The adverb "substantially" is intended to mean that a small amount of impurities such as those derived from glass raw materials, a manufacturing apparatus, and the like may be contained. The term "alkali metal oxides" means Li$_2$O, Na$_2$O, and K$_2$O, and is sometimes referred to as R$_2$O. The upper and lower limits of each of the following contents can be arbitrarily combined.

[Glass fiber]

In one embodiment of the present invention, a glass fiber has a fiber diameter of 18 $\mu$m or less. This glass fiber includes a glass composition. A MgO content in the glass composition is 15% or more. A common logarithm log$\eta$ of a viscosity $\eta$ [dPa•s] of the glass composition at a devitrification temperature is 2.6 or more. An example of this glass composition will be described later.
A glass fiber according to another embodiment of the present invention includes the later-described glass composition. This glass fiber may have a fiber diameter of 18 $\mu$m or less, too.
The glass fiber (hereinafter referred to as "the glass fiber of the present embodiment") of each of these embodiments may have a fiber diameter of 15 $\mu$m or less, 13 $\mu$m or less, 11 $\mu$m or less, 10 $\mu$m or less, 9 $\mu$m or less, or

even 7 μm or less. Because the glass fiber of the present embodiment can have a high Young's modulus, the glass fiber of the present embodiment can exhibit a high reinforcing ability even with a small diameter. Therefore, the glass fiber of the present embodiment is particularly suitable for use in thin reinforced materials, such as thin glass-fiber-reinforced plastics (FRPs). However, articles that can include the glass fiber of the present embodiment are not limited to FRPs, and the thicknesses of such articles are not limited. The lower limit of the fiber diameter of the glass fiber of the present embodiment is not limited to a particular one, and may be 3 μm or more, or even 7 μm or more. The glass fiber of the present embodiment can have a high Young's modulus and a small diameter, but may have a diameter that is not excessively small, such as a diameter in the range of 7 to 15 μm, or even 9 to 13 μm.

The glass fiber of the present embodiment may include, in addition to the glass composition, any of various known treatment agents, resins, and other components as appropriate according to the application of the glass fiber.

[Glass composition]

<Components>

Components that can be included in the glass composition will be described hereinafter.

($SiO_2$)

$SiO_2$ is a component that forms a glass network, and is also a component that adjusts the devitrification temperature and the viscosity during glass forming and that improves the acid resistance. A $SiO_2$ content is, for example, 50 to 65%. The lower limit of the $SiO_2$ content is, for example, 52% or more, 54% or more, 55% or more, 56% or more, 57% or more, 57.5% or more, in some cases, 58% or more, or even 59% or more. The upper limit of the $SiO_2$ content is, for example, 63% or less, 62% or less, or, in some cases, 61% or less.

($Al_2O_3$)

$Al_2O_3$ is a component that adjusts the devitrification temperature and the viscosity during glass forming and that improves the water resistance of the resulting glass. An $Al_2O_3$ content is, for example, 5 to 26%. The lower limit of the $Al_2O_3$ content is, for example, 7.5% or more, 8% or more, 9% or more, 10% or more, 10.5% or more, 11% or more, 12% or more, in some cases, 12.5% or more, or even 13% or more. The upper limit of the $Al_2O_3$ content is, for example, 20% or less, 18% or less, 17.5% or less, 16% or less, or, in some cases, 15% or less.

(MgO)

MgO is a component that improves the Young's modulus and that affects the devitrification temperature, the viscosity, and the like. A MgO content is, for example, 15 to 30%. The lower limit of the MgO content is, for example, 16% or more, 17.5% or more, 18% or more, 20% or more, 22% or more, in some cases, 23% or more, or even 24% or more. The upper limit of the MgO content is, for example, 27% or less, 26% or less, or, in some cases, 25% or less.

The $SiO_2$ content, the $Al_2O_3$ content, and the MgO content can be set, as described above, by combining the above upper and lower limits. The ranges thereof are desirably as follows.

| | | |
|---|---|---|
| Example 1: | $SiO_2$ 52 to 62% and $Al_2O_3$ | 7.5 to 26% |
| Example 2: | In Example 1, $Al_2O_3$ | 9 to 26% |
| Example 3: | In Example 2, $SiO_2$ | 55 to 62% |
| | $Al_2O_3$ | 10.5 to 17.5% |
| | MgO | 17.5 to 30% |
| Example 4: | In Example 3, $Al_2O_3$ | 11 to 17.5% |
| | MgO | 20 to 30% |

However, the above ranges are just examples, and the contents of the components are not limited to those in Examples 1 to 4 and can be set to other values.

$SiO_2$, $Al_2O_3$, and MgO are components that are important in making a practical glass composition having a high Young's modulus. A sum of the contents of these components may be more than 90%, 91% or more, or even 92% or more. The sum of the $SiO_2$ content, the $Al_2O_3$ content, and the MgO content may be, for example, 98.5% or less, or even 98% or less. When the sum of the contents is reduced as low as the above, the properties of the glass composition are adjustable in a wider range by addition of another component.

The glass composition of the present embodiment preferably further includes CaO and/or the alkali metal oxides. A glass composition in which the MgO content is high tends to have too low a viscosity $\eta$ at the devitrification temperature. However, this viscosity can be adjusted by addition of CaO and the alkali metal oxides. A sum of a CaO content and a total alkali metal oxide content is, for example, 0.1% or more, 0.5% or more, 1.0% or more, or even 1.5% or more.

(CaO)

CaO is a component that adjusts the devitrification temperature and the viscosity during glass forming. The CaO content is, for example, 0 to 8%. The lower limit of the CaO content is, for example, 0.1% or more, 0.5% or more, 0.7% or more, 1% or more, in some cases, 2% or more, or even 3% or more. The upper limit of the CaO content is, for example, 6% or less, 5.5% or less, 5% or less, or even 4% or less.

(Alkali metal oxides)

The alkali metal oxides ($R_2O$) are components that adjust the devitrification temperature and the viscosity during glass forming. The total alkali metal oxide content, specifically, $Li_2O + Na_2O + K_2O$, is, for example, 0.3 to 3.0%. The lower limit of the total alkali metal oxide content is, for example, 0.5% or more, 0.7% or more, or even 0.8% or more, or, in some cases, 1.0% or more. The upper limit of the total alkali metal oxide content is, for example, 2.5% or less, 2.0% or less, 1.8% or less, 1.5% or less, in some cases, or less than 1.1%. A high total alkali metal oxide content can sometimes prevent a sufficient increase in Young's modulus.

A $Na_2O$ content is, for example, more than 0.2% and less than 3%, or is, for example, more than 0.2% and 2.85% or less. The lower limit of the $Na_2O$ content is, for example, 0.25% or more, 0.3% or more, 0.4% or more, or even 0.5% or more. The upper limit of the $Na_2O$ content is, for example, 2.5% or less, 2.0% or less, 1.5% or less, 1.0% or less, 0.8% or less, in some cases, 0.6% or less, or even 0.55% or less.

The glass composition does not need to include both $Li_2O$ and $K_2O$, but preferably includes at least one of them. A sum of a $Li_2O$ content and a $K_2O$ content is preferably 0.1% or more.

The $Li_2O$ content is, for example, 0 to 3%, or is, for example, 0 to 2.4%. The lower limit of the $Li_2O$ content is, for example, 0.1% or more, 0.2% or more, or, in some cases, 0.3% or more. The upper limit of the $Li_2O$ content is, for example, 2.0% or less, 1.5% or less, 1.0% or less, 0.8% or less, in some cases, 0.6% or less, 0.5% or less, or even 0.4% or less. A preferred example of the $Li_2O$ content is 0.1 to 0.8%.

$Li_2O$ has an advantage over $Na_2O$ and $K_2O$ in that both reduction of a Young's modulus decreasing effect and adjustment of properties such as the devitrification temperature are achieved. Therefore, in the case where, for example, 0.3% or more alkali oxides are added to a glass composition designed to achieve a high Young's modulus, the $Li_2O$ content is generally adjusted to be higher than the $Na_2O$ content and the $K_2O$ content. For example, in the examples of Patent Literature 2, in the case where the total alkali metal oxide content is 0.3% or more, $Li_2O$ is added such that the $Li_2O$ content is higher than the $Na_2O$ content and the $K_2O$ content by 0.45% or more.

However, for effective control of the viscosity at the devitrification temperature, priority is desirably given to appropriate control of a later-described $Na_2O$ ratio. In addition, the raw material of $Li_2O$ is relatively expensive compared to those of the other alkali metal oxides. Taking these into account, a small amount of $Li_2O$ may be included such that the $Li_2O$ content is equal to or less than the $Na_2O$ content plus 2%. A small amount of $Li_2O$ may be included such that the $Li_2O$ content does not exceed the $Na_2O$ content.

The $K_2O$ content is, for example, 0 to 2.4%. The lower limit of the $K_2O$ content is, for example, 0.01% or more, even 0.02% or more, or, in some cases, 0.05% or more. The upper limit of the $K_2O$ content is, for example, 1.0% or less, 0.5% or less, 0.2% or less, or, in some cases, 0.1% or less. $K_2O$ has a greater Young's modulus decreasing effect than $Li_2O$ and $Na_2O$. The $K_2O$ content is preferably smaller than the $Li_2O$ content and the $Na_2O$ content. The glass component may be substantially free of $K_2O$.

The relative magnitude relations, described in the above two paragraphs, between the alkali metal oxides can be translated as follows. The $Li_2O$ content (mol%), the $Na_2O$ content (mol%), and the $K_2O$ content (mol%) are respectively expressed as $[Li_2O]$, $[Na_2O]$, and $[K_2O]$. The alkali metal oxides are preferably included to be within at least one of the following ranges.

$$0 < [Li_2O] \leq ([Na_2O] + 2)$$

$$0 < [Li_2O] \leq [Na_2O]$$

$$[K_2O] < [Na_2O]$$

$$[K_2O] < [Li_2O]$$

When the total $R_2O$ content is 0.3% or more, more specifically 0.3 to 3.0%, a ratio of the $Na_2O$ content to the $R_2O$ content ($[R_2O]/[Na_2O]$ according to the above notation) (the ratio can be hereinafter also referred to as "$Na_2O$ ratio") is preferably 0.2 or more and 0.95 or less. The spinning capability of a glass composition in which the MgO content is high is improved by adjusting the $Na_2O$ ratio within the appropriate range. The lower limit of the $Na_2O$ ratio may be, for example, 0.22 or more, 0.27 or more, or even 0.3 or more. The upper limit of the $Na_2O$ ratio is, for example, 0.92 or less, 0.86 or less, 0.8 or less, 0.78 or less, 0.73 or less, or, in some cases, 0.7 or less. An appropriate adjustment of the $Na_2O$ ratio makes it possible to achieve a desired effect, such as a sufficient increase in $\log\eta$, by addition of a limited amount of the alkali metal oxides.

That is, the following are preferably established, where the total alkali metal oxide content (mol%) is expressed as $[R_2O]$.

$$0.3 \leq [R_2O] \leq 3.0$$

$$0.2 \leq ([Na_2O]/[R_2O]) \leq 0.95$$

($B_2O_3$)

$B_2O_3$ is a component that forms a glass network and is also a component that adjusts the devitrification temperature and the viscosity during glass forming. $AB_2O_3$ content is, for example, 0 to 1.6%. The lower limit of the $B_2O_3$ content is, for example, 0.1% or more, 0.5% or more, or, in some cases, 1.0% or more. The upper limit of the $B_2O_3$ content is, for example, less than 1.5%, or, in some cases, less than 1.2%. The glass component may be substantially free of $B_2O_3$.

($Y_2O_3$ and $La_2O_3$)

$Y_2O_3$ and $La_2O_3$ are component that improves the Young's modulus. However, raw materials of these components are relatively expensive. A sum of an $Y_2O_3$ content and a $La_2O_3$ content is, for example, 0 to 0.5%, or even 0 to 0.3%. The upper limit of the sum of the $Y_2O_3$ content and the $La_2O_3$ content may be 0.1% or less. The glass component may be substantially free of $Y_2O_3$ and $La_2O_3$.

(Additional component)

The glass composition may include an additional component other than the above. The additional component the glass composition can include is, for example, SrO, BaO, ZnO, $TiO_2$, $ZrO_2$, $Fe_2O_3$, $Cl_2$, $F_2$, $SnO_2$, $CeO_2$, $P_2O_5$, or $SO_3$. A content of each of these components is, for example, 0 to 5%. The upper limit of the content of each of these components may be 3% or less, 1% or less, or even 0.5% or less. The glass component may be substantially free of the additional component, i.e., a component other than the above-described components from $SiO_2$ to $La_2O_3$. A total additional component content may be 7% or less, 5% or less, or even 3% or less. The content of a component that can have different valences in the glass composition is calculated, as is conventional, by assuming that the oxide has a valence specified above. For example, although part of iron oxide is present as FeO in the glass composition, the iron oxide content is calculated and shown as $Fe_2O_3$.

<Properties>

In an embodiment of the present invention, the common logarithm $\log\eta$ of the viscosity $\eta$ of the glass composition at the devitrification temperature thereof is, for example, 2.6 or more. The unit of $\eta$ is [dPa•s]. Moreover, the present invention includes a technique of improving a glass composition having as high a Young's modulus as, for example, 93 GPa or more. Hereinafter, the $\log\eta$ and the Young's modulus will be described.

(logη)

The glass composition having a high logη has been revealed to be suitable for being spun into a glass fiber having a relatively small fiber diameter. The logη is, for example, 2.6 or more. The lower limit of the logη may be 2.7 or more, 2.8 or more, 2.9 or more, 2.93 or more, or, in some cases, 3.0 or more. The upper limit of the logη is not limited to a particular one, and is, for example, 3.4 or less, or even 3.2 or less.

Glass compositions in which the MgO content is high and which is suitable for improving Young's modulus tend to have a small difference between a working temperature suitable for spinning and the devitrification temperature. It is common that spinning a glass composition having a small difference between these temperatures is difficult. In particular, spinning such a glass composition into a glass fiber having a small fiber diameter is difficult. However, such difficulties in spinning can be reduced by controlling the logη.

(Young's modulus)

The Young's modulus of the glass composition is, for example, 93 GPa or more. The lower limit of the Young's modulus is 95 GPa or more, 97 GPa or more, 99 GPa or more, or, in some cases, 100 GPa or more. The upper limit of the Young's modulus is not limited to a particular one, and is, for example, 115 GPa or less, or even 110 GPa or less.

<Examples of glass composition>

In an embodiment of the present invention, a glass composition includes:

| | |
|---|---|
| $SiO_2$ | 50 to 65%; |
| $Al_2O_3$ | 5 to 26%; |
| $B_2O_3$ | 0 to 1.6%; |
| MgO | 15 to 30%; |
| CaO | 0 to 8%; |
| $Li_2O$ | 0 to 2.4%; and |
| $Na_2O$ | more than 0.2% and 2.85% or less, wherein |

the sum of the $Li_2O$ content, the $Na_2O$ content, and the $K_2O$ content is 0.3 to 3.0%, and
the ratio of the $Na_2O$ content to the sum of the $Li_2O$ content, the $Na_2O$ content, and the $K_2O$ content is 0.2 or more and 0.95 or less.

In another embodiment of the present invention, a glass composition includes:

| | |
|---|---|
| $SiO_2$ | 50 to 65%; |
| $Al_2O_3$ | 5 to 26%; |
| $B_2O_3$ | 0 to 1.6%; |
| MgO | 15 to 30%; |
| CaO | 0 to 8%; |
| $Li_2O$ | 0% or more and less than 3%; and |
| $Na_2O$ | more than 0.2% and less than 3%, wherein |

the logη is 2.6 or more.

In yet another embodiment of the present invention, in a glass composition,

the Young's modulus is 93 GPa or more, and
the sum of the $Li_2O$ content, the $Na_2O$ content, and the $K_2O$ content is 0.3 to 3.0%,
the ratio of the $Na_2O$ content to the sum of the $Li_2O$ content, the $Na_2O$ content, and the $K_2O$ content is 0.2 or more and 0.95 or less.

In yet another embodiment of the present invention, in a glass composition,

the sum of the $SiO_2$ content, the $Al_2O_3$ content, and the MgO content is more than 90% in mol%,
the common logarithm $\log\eta$ of the viscosity $\eta$ [dPa•s] at the devitrification temperature is 2.6 or more.

The description of the above components and properties is applied to the glass composition of every embodiment described above as an example.

The glass composition of each of the above embodiments is suitable for manufacturing a glass fiber, particularly a glass fiber having a fiber diameter in the above range. In an embodiment of the present invention, the glass fiber includes the glass composition of any of the above embodiments, or is formed of the glass composition of any of the above embodiments. The glass fiber may be in a form of, for example, at least one selected from the group consisting of a strand, a roving, a yarn, a cloth, a chopped strand, glass wool, and a milled fiber. The cloth is, for example, a roving cloth or a yarn cloth. Because of its excellent properties, the glass composition of each of the above embodiments can also be used as a shaped glass product other than the glass fiber. An example of the shaped glass product is a glass particle. The glass particle can be manufactured by breaking the glass fiber or by using, as for the glass fiber, a nozzle having a shape corresponding to an intended shape. Therefore, the glass composition of each of the above embodiments is also suitable for manufacturing the glass particle without devitrification. In one embodiment of the present invention, the glass particle includes the glass composition of any of the above embodiments or is formed of the glass composition of any of the above embodiments.

The glass particle may be, for example, an equivalent of at least one selected from the group consisting of a glass flake, a glass powder, a glass bead, and a fine flake. The glass particle can be included in FRPs. In other words, the glass particle can be used, for example, for reinforcement of a reinforced body typically formed of a resin.

[Non-woven fabric, rubber-reinforcing cord]

Each glass fiber provided by the present invention can be used in the same applications as conventional glass fibers. In one embodiment of the present invention, a non-woven glass fiber fabric including the glass fiber is provided. In another embodiment of the present invention, a rubber-reinforcing cord including a strand formed of a bundle of the glass fibers is provided. The glass fiber can also be used in other applications. Examples of the other applications include reinforcement of a reinforced body typically formed of a resin.

EXAMPLES

Hereinafter, the embodiments of the present invention will be described in more detail by Examples and Comparative Examples. The contents of components in each composition are expressed in mol% also in Tables 1 to 3.

<Glass compositions having Compositions A to H and W to Z>

Common glass raw materials such as silica sand were blended according to each composition shown in Table 1 to prepare glass raw material batches for Examples and Comparative Examples. Each batch was molten by heating it to 1500 to 1600°C using an electric furnace, and was kept molten for about 4 hours until the composition became uniform. After that, part of the molten glass (glass melt) was poured onto an iron plate, and was slowly cooled to room temperature in an electric furnace. A glass composition (sheet-shaped body; glass specimen) as a bulk was obtained in this manner. Properties of thus-obtained glass compositions were evaluated as follows. Table 1 also shows the results.

(Devitrification temperature)

Each glass composition crushed to a particle diameter of 1.0 to 2.8 mm was put in a platinum boat. The glass composition in the boat was left in an electric furnace with a temperature gradient (800 to 1400°C) for two hours. The devitrification temperature of the glass composition was determined from the maximum temperature of the electric furnace at a position where a crystal appeared. In the case where the glass turned cloudy and no crystal was able to be observed, the maximum temperature of the electric furnace at a position where cloudiness appeared was defined as the devitrification temperature. Here, the particle diameter is a value measured by sieving. It should be noted that varying temperatures at different places in the electric furnace (temperature distribution in the electric furnace) were measured in advance, and the glass composition placed at a given place in the electric furnace was heated at the temperature measured in advance for the given place.

(Viscosity at devitrification temperature)

For each obtained glass composition, the viscosity $\eta$ at the devitrification temperature was measured by a common platinum ball-drawing method, and the logη was calculated from the measured value.

(Young's modulus)

The Young's modulus of each glass composition was determined using an equation $E = 3\rho \cdot v_t^2 \cdot (v_l^2 - 4/3 \cdot v_t^2)/(v_l^2 - v_t^2)$. A longitudinal wave velocity vl and a transverse wave velocity vt were measured by a common ultrasonic method for an elastic wave propagating through the glass. A density $\rho$ was separately measured for the glass by Archimedes' principle.

<Spinning test>

Each of the glass compositions having Compositions A to E and W to Z was subjected to a spinning test in which a melt was spun using a platinum nozzle.
The spinning test results were evaluated according to the following criteria. Table 2 shows the results.

○: A long-term steady spinning is able to be performed, which indicates a sufficient manufacturability.
△: Spinning is able to be performed for 10 minutes or longer, but a long-term steady spinning fails.
×1: The platinum nozzle used gets clogged due to devitrification.
×2: The molten glass has too low a viscosity to be spun.

<Adjustment of alkali metal oxides>

Glass compositions were produced using Compositions C1 and C2 and Compositions D1 to D4, which are based on Compositions C and D and in which only the total alkali metal oxide contents are different from those in Compositions C and D, in the same manner as described above, and were evaluated for their properties. Table 3 shows the compositions and the results.
As shown in Table 2, it has been confirmed that the common logarithm logη of Compositions W and X are so small that Compositions W and X are inappropriate for spinning a fiber having a fiber diameter of 18 $\mu$m or less. Spinning itself failed for Compositions Y and Z. On the other hand, it has been confirmed that spinning of the Compositions A to E having a common logarithm logη of 2.6 or more can be favorably achieved even into a small diameter fiber. As shown in Table 3, the closer the $Na_2O$ ratio (molar ratio $Na_2O/R_2O$) is to approximately 0.5, the greater the common logarithm logη is. It is understood that the $Na_2O$ ratio appropriate for achieving a common logarithm logη of 2.6 or more is 0.2 to 0.95, or even 0.2 to 0.8. However, as can be seen from Composition W in Table 1, in the case of a composition in which the total alkali metal oxide ($R_2O$) content is too small, adjustment of the $Na_2O$ ratio does not make a great contribution to an increase in common logarithm logη. It should be noted that although slightly lower than those of Compositions W to Z, the Young's moduli of Compositions A to H are sufficiently high compared to those of general-purpose glass fiber compositions.
The working temperatures of the glasses A to H are in the range of 1268 to 1356°C. The difference between the working temperature and the devitrification temperature is less than 60°C for the glasses A to H. The same applies to the glasses D2 to D4. It should be noted that the working temperature is a temperature at which the common logarithm logη is 3.0.

[Table 1]

| Composition/ Properties | A | B | C | D | E | F | G | H | W | X | Y | Z |
|---|---|---|---|---|---|---|---|---|---|---|---|---|
| $SiO_2$ | 62.0 | 57.5 | 57.5 | 55.0 | 60.0 | 61.0 | 62.0 | 60.0 | 52.43 | 54.84 | 54.92 | 57.35 |
| $Al_2O_3$ | 16.0 | 12.5 | 12.5 | 14.5 | 12.0 | 13.5 | 15.5 | 15.0 | 12.48 | 14.96 | 14.98 | 14.96 |
| $B_2O_3$ | 1.0 | 1.0 | 1.0 | 1.5 | 0.1 | 1.1 | 1.0 | 1.0 | 0.00 | 1.20 |  | 1.00 |
| $MgO$ | 16.0 | 24.0 | 24.5 | 23.0 | 26.0 | 22.5 | 20.0 | 22.0 | 24.97 | 27.52 | 24.96 | 25.43 |
| $CaO$ | 3.0 | 4.0 | 4.0 | 5.0 | 1.0 | 1.0 | 0.5 | 1.0 | 9.99 | 0.17 | 4.99 | 0.15 |
| $Li_2O$ | 1.0 | 0.45 | 0.25 | 0.5 | 0.5 | 0.5 | 0.5 | 0.5 |  | 1.20 |  | 1.00 |
| $Na_2O$ | 1.0 | 0.45 | 0.25 | 0.6 | 0.5 | 0.5 | 0.5 | 0.5 | 0.03 | 0.05 | 0.08 | 0.05 |
| $K_2O$ |  | 0.1 | 0.02 | 0.1 |  |  |  |  | 0.01 | 0.01 |  | 0.01 |
| $R_2O$ | 2.0 | 1.0 | 0.52 | 1.1 | 1.0 | 1.0 | 1.0 | 1.0 | 0.04 | 1.26 | 0.08 | 1.06 |
| $Na_2O/R_2O$ | 0.50 | 0.45 | 0.48 | 0.50 | 0.50 | 0.50 | 0.50 | 0.50 | 0.75 | 0.04 | 1.00 | 0.047 |
| Devitrification temperature (°C) | 1327 | 1275 | 1331 | 1295 | 1372 | 1332 | 1327 | 1320 | 1280 | 1345 | 1395 | 1400 |
| $\log\eta$ | 3.20 | 2.95 | 2.93 | 2.90 | 2.66 | 2.94 | 3.13 | 3.04 | 2.55 | 2.47 | 2.18 | 2.15 |
| Young's modulus (GPa) | 94.0 | 99.5 | 100.2 | 100.2 | 99.5 | 99.1 | 99.4 | 99.8 | 102.4 | 101.8 | 102.7 | 101.9 |

[Table 2]

| | Composition | $\log\eta$ | MgO | $R_2O$ | $Na_2O/R_2O$ | Fiber diameter ($\mu$m) | Spinning rate (rpm) | Spinning ability |
|---|---|---|---|---|---|---|---|---|
| Example 1 | A | 3.20 | 16.0 | 2.0 | 0.50 | 7 | 2700 | ○ |
| Example 2 | A | 3.20 | 16.0 | 2.0 | 0.50 | 13 | 850 | ○ |
| Example 3 | A | 3.20 | 16.0 | 2.0 | 0.50 | 18 | 450 | ○ |
| Example 4 | B | 2.95 | 24.0 | 1.0 | 0.45 | 7 | 2700 | ○ |
| Example 5 | B | 2.95 | 24.0 | 1.0 | 0.45 | 13 | 850 | ○ |
| Example 6 | B | 2.95 | 24.0 | 1.0 | 0.45 | 18 | 450 | ○ |
| Example 7 | C | 2.93 | 24.5 | 0.5 | 0.48 | 7 | 2700 | ○ |
| Example 8 | C | 2.93 | 24.5 | 0.5 | 0.48 | 13 | 850 | ○ |
| Example 9 | C | 2.93 | 24.5 | 0.5 | 0.48 | 18 | 450 | ○ |
| Example 10 | D | 2.90 | 23.0 | 1.1 | 0.50 | 7 | 2700 | ○ |
| Example 11 | D | 2.90 | 23.0 | 1.1 | 0.50 | 13 | 850 | ○ |
| Example 12 | D | 2.90 | 23.0 | 1.1 | 0.50 | 18 | 450 | ○ |
| Example 13 | E | 2.66 | 26.0 | 1.0 | 0.50 | 7 | 3080 | ○ |
| Example 14 | E | 2.66 | 26.0 | 1.0 | 0.50 | 13 | 950 | ○ |
| Example 15 | E | 2.66 | 26.0 | 1.0 | 0.50 | 18 | 500 | ○ |
| Comparative Example 1 | W | 2.55 | 25.0 | 0.04 | 0.75 | 7 | 2300 | ×2 |
| Comparative Example 2 | W | 2.55 | 25.0 | 0.04 | 0.75 | 13 | 700 | ×1 |
| Comparative Example 3 | W | 2.55 | 25.0 | 0.04 | 0.75 | 18 | 400 | Δ |
| Comparative Example 4 | W | 2.55 | 25.0 | 0.04 | 0.75 | 23 | 300 | ○ |
| Comparative Example 5 | X | 2.47 | 27.5 | 1.26 | 0.04 | 7 | 3080 | ×2 |
| Comparative Example 6 | X | 2.47 | 27.5 | 1.26 | 0.04 | 13 | 850 | ×1 |
| Comparative Example 7 | X | 2.47 | 27.5 | 1.26 | 0.04 | 18 | 450 | Δ |
| Comparative Example 8 | X | 2.47 | 27.5 | 1.26 | 0.04 | 23 | 300 | ○ |
| Comparative Example 9 | Y | 2.18 | 25.0 | 0.08 | 1.00 | 23 | 300 | ×2 |
| Comparative Example10 | Z | 2.15 | 25.4 | 1.06 | 0.047 | 23 | 300 | ×2 |
| ×1: Clogged due to devitrification ×2: Not being spun into a thread | | | | | | | | |

[Table 3]

| Composition/ Properties | C1 | C | C2 | D1 | D2 | D | D3 | D4 |
|---|---|---|---|---|---|---|---|---|
| $SiO_2$ | 57.5 | 57.5 | 57.5 | 55.0 | 55.0 | 55.0 | 55.0 | 55.0 |
| $Al_2O_3$ | 12.5 | 12.5 | 12.5 | 14.5 | 14.5 | 14.5 | 14.5 | 14.5 |
| $B_2O_3$ | 1.0 | 1.0 | 1.0 | 1.5 | 1.5 | 1.5 | 1.5 | 1.5 |
| MgO | 24.5 | 24.5 | 24.5 | 23.0 | 23.0 | 23.0 | 23.0 | 23.0 |
| CaO | 4.0 | 4.0 | 4.0 | 5.0 | 5.0 | 5.0 | 5.0 | 5.0 |
| $Li_2O$ | 0.5 | 0.25 | 0.00 | 0.90 | 0.75 | 0.5 | 0.3 | 0.1 |
| $Na_2O$ | | 0.25 | 0.50 | 0.10 | 0.25 | 0.6 | 0.8 | 1.0 |
| $K_2O$ | | 0.02 | 0.02 | 0.10 | 0.10 | 0.1 | 0.1 | 0.1 |
| $R_2O$ | 0.5 | 0.52 | 0.52 | 1.10 | 1.10 | 1.1 | 1.1 | 1.1 |
| $Na_2O/R_2O$ | 0.00 | 0.48 | 0.96 | 0.09 | 0.23 | 0.50 | 0.68 | 0.86 |
| Devitrification temperature (°C) | 1360 | 1331 | 1378 | 1312 | 1308 | 1295 | 1317 | 1340 |
| $\log\eta$ | 2.50 | 2.93 | 2.41 | 2.53 | 2.72 | 2.90 | 2.74 | 2.62 |
| Young's modulus (GPa) | 100.5 | 100.2 | 100.4 | 100.7 | 100.5 | 100.2 | 100.2 | 100.3 |

## Claims

1. A glass fiber having a fiber diameter of 18 $\mu$m or less, the glass fiber comprising a glass composition, wherein

   a MgO content in the glass composition is 15% or more in mol%, and
   a common logarithm $\log\eta$ of a viscosity $\eta$ [dPa•s] of the glass composition at a devitrification temperature is 2.6 or more.

2. The glass fiber according to claim 1, wherein a sum of a $SiO_2$ content, an $Al_2O_3$ content, and the MgO content in the glass composition is more than 90% in mol%.

3. The glass fiber according to claim 1, wherein a sum of a CaO content and a total alkali metal oxide content in the glass composition is 0.1% or more in mol%.

4. The glass fiber according to claim 1, wherein a Young's modulus of the glass composition is 93 GPa or more.

5. The glass fiber according to claim 4, wherein the Young's modulus is 95 GPa or more.

6. The glass fiber according to claim 5, wherein the Young's modulus is 99 GPa or more.

7. The glass fiber according to claim 1, wherein the common logarithm $\log\eta$ is 2.7 or more.

8. The glass fiber according to claim 1, wherein the MgO content in the glass composition is 20% or more in mol%.

9. The glass fiber according to claim 1, wherein

   a sum of a $Li_2O$ content, a $Na_2O$ content, and a $K_2O$ content in the glass composition is 0.3 to 3.0% in mol%, and
   a $Na_2O$ ratio defined by a ratio of the $Na_2O$ content in mol% to the sum of the $Li_2O$ content, the $Na_2O$ content, and the $K_2O$ content in mol% is 0.2 or more and 0.95 or less.

10. The glass fiber according to claim 1, wherein a $Li_2O$ content in the glass composition is 0.1 to 0.8% in mol%.

11. The glass fiber according to claim 1, wherein a sum of an $Y_2O_3$ content and a $La_2O_3$ content in the glass composition is 0 to 0.5% in mol%.

12. The glass fiber according to claim 1, having a fiber diameter of 13 $\mu$m or less in a form of a monofilament.

13. A glass composition for glass fibers, the glass composition comprising, in mol%:

| | |
|---|---|
| $SiO_2$ | 50 to 65%; |
| $Al_2O_3$ | 5 to 26%; |
| $B_2O_3$ | 0 to 1.6%; |
| MgO | 15 to 30%; |
| CaO | 0 to 8%; |
| $Li_2O$ | 0 to 2.4%; and |
| $Na_2O$ | more than 0.2% and 2.85% or less, wherein |

a sum of a $Li_2O$ content, a $Na_2O$ content, and a $K_2O$ content is 0.3 to 3.0%, and
a $Na_2O$ ratio defined by a ratio of the $Na_2O$ content to the sum of the $Li_2O$ content, the $Na_2O$ content, and the $K_2O$ content is 0.2 or more and 0.95 or less.

14. The glass composition according to claim 13, wherein a sum of a $SiO_2$ content, an $Al_2O_3$ content, and a MgO content is more than 90% in mol%.

15. The glass composition according to claim 13, wherein a $B_2O_3$ content is 0.1 to 1.6% in mol%.

16. The glass composition according to claim 15, wherein a $SiO_2$ content is 57 to 62% in mol%.

17. The glass composition according to claim 13, wherein

a $SiO_2$ content is 52 to 62% in mol%, and
an $Al_2O_3$ content is 7.5 to 26% in mol%.

18. The glass composition according to claim 17, wherein the $Al_2O_3$ content is 9 to 26% in mol%.

19. The glass composition according to claim 18, wherein, in mol%,

the $SiO_2$ content is 55 to 62%,
the $Al_2O_3$ content is 10.5 to 17.5%, and
a MgO content is 17.5 to 30%.

20. The glass composition according to claim 19, wherein, in mol%,

the $Al_2O_3$ content is 11 to 17.5%, and
the MgO content is 20 to 30%.

21. The glass composition according to claim 13, wherein the $Li_2O$ content is 0.1 to 0.8% in mol%.

22. The glass composition according to claim 13, wherein a sum of an $Y_2O_3$ content and a $La_2O_3$ content in the glass composition is 0 to 0.5% in mol%.

23. A glass composition for glass fibers, comprising, in mol%:

| | |
|---|---|
| $SiO_2$ | 50 to 65%; |
| $Al_2O_3$ | 5 to 26%; |
| $B_2O_3$ | 0 to 1.6%; |
| MgO | 15 to 30%; |
| CaO | 0 to 8%; |

(continued)

| | |
|---|---|
| $Li_2O$ | 0% or more and less than 3%; and |
| $Na_2O$ | more than 0.2% and less than 3%, wherein |

a common logarithm $\log\eta$ of a viscosity $\eta$ [dPa•s] at a devitrification temperature is 2.6 or more.

24. The glass composition according to claim 23, wherein the common logarithm $\log\eta$ is 2.7 or more.

25. The glass composition according to claim 23, wherein a MgO content is 20% or more in mol%.

26. A glass composition for glass fibers, wherein

a Young's modulus is 93 GPa or more,
a sum of a $Li_2O$ content, a $Na_2O$ content, and a $K_2O$ content is 0.3 to 3.0% in mol%, and
a ratio of the $Na_2O$ content to the sum of the $Li_2O$ content, the $Na_2O$ content, and the $K_2O$ content is 0.2 or more and 0.95 or less in mol%.

27. The glass composition according to claim 26, wherein the Young's modulus is 99 GPa or more.

28. A glass fiber, comprising the glass composition according to any one of claims 13 to 27.

29. The glass fiber according to claim 28, having a fiber diameter of 18 $\mu$m or less.

30. The glass fiber according to claim 28, being in a form of at least one selected from the group consisting of a strand, a roving, a yarn, a cloth, a chopped strand, glass wool, and a milled fiber.

31. The glass fiber according to any one of claims 1 to 12, being at least one selected from the group consisting of a strand, a roving, a yarn, a cloth, a chopped strand, glass wool, and a milled fiber.

32. A rubber-reinforcing cord, comprising a strand formed of a bundle of a plurality of the glass fibers according to claim 28.

33. A rubber-reinforcing cord, comprising a strand formed of a bundle of a plurality of the glass fibers according to any one of claims 1 to 12.

34. A glass fiber non-woven fabric, comprising the glass fiber according to claim 28.

35. A glass fiber non-woven fabric, comprising the glass fiber according to any one of claims 1 to 12.

36. A glass particle, comprising the glass composition according to any one of claims 13 to 27.

## INTERNATIONAL SEARCH REPORT

| International application No. |
| --- |
| **PCT/JP2022/030028** |

| | |
| --- | --- |
| **A.** | **CLASSIFICATION OF SUBJECT MATTER** |

*C03C 13/00*(2006.01)i; *D07B 1/02*(2006.01)i; *D04H 3/004*(2012.01)i
FI:   C03C13/00; D07B1/02; D04H3/004

According to International Patent Classification (IPC) or to both national classification and IPC

| | |
| --- | --- |
| **B.** | **FIELDS SEARCHED** |

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | WO 2019/198258 A1 (NIPPON SHEET GLASS CO., LTD.) 17 October 2019 (2019-10-17) paragraphs [0020], [0035], [0042], [0054]-[0055], [0058], examples 9, 12, 14, 26, table 1 | 1-36 |
| Y | | 1-36 |
| X | US 2012/0163987 A1 (HAUSRATH, Robert L.) 28 June 2012 (2012-06-28) claims, paragraphs [0033], [0036]-[0039], table 1 | 1, 3-5, 7, 23-24, 28-31 |
| Y | | 1-36 |
| Y | JP 2019-533627 A (JUSHI GROUP CO., LTD.) 21 November 2019 (2019-11-21) paragraph [0054], tables 1A-1D | 1-4, 7, 9-19, 21-24, 26, 28-36 |
| A | | 5-6, 8, 20, 25, 27 |
| Y | JP 2020-529378 A (TAISHAN FIBERGLASS INC.) 08 October 2020 (2020-10-08) table 1 | 1-5, 7-9, 11-20, 22-26, 28-36 |
| A | | 6, 10, 21, 27 |

| ☑ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 September 2022** | **27 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/030028**

C.    DOCUMENTS CONSIDERED TO BE RELEVANT

| Category* | Citation of document, with indication, where appropriate, of the relevant passages | Relevant to claim No. |
|---|---|---|
| Y | JP 2018-517654 A (JUSHI GROUP CO., LTD.) 05 July 2018 (2018-07-05) tables 1A-1C | 1-7, 9-18, 21-24, 26-36 |
| A | | 8, 19-20, 25 |
| Y | JP 2018-521944 A (JUSHI GROUP CO., LTD.) 09 August 2018 (2018-08-09) tables 1A-1C | 1-5, 7-10, 12-21, 23-26, 28-36 |
| A | | 6, 11, 22, 27 |

Form PCT/ISA/210 (second sheet) (January 2015)

**INTERNATIONAL SEARCH REPORT**
Information on patent family members

| International application No. |
|---|
| **PCT/JP2022/030028** |

| Patent document cited in search report | | | Publication date (day/month/year) | Patent family member(s) | | | Publication date (day/month/year) |
|---|---|---|---|---|---|---|---|
| WO | 2019/198258 | A1 | 17 October 2019 | JP | 2020-33258 | A | |
| | | | | US | 2021/0139368 | A | |
| | | | | paragraphs [0026], [0048], [0062], [0081]-[0083], [0085], examples 9, 12, 14, 26, table 1 | | | |
| | | | | EP | 3778508 | A | |
| | | | | CN | 111936440 | A | |
| US | 2012/0163987 | A1 | 28 June 2012 | (Family: none) | | | |
| JP | 2019-533627 | A | 21 November 2019 | US | 2021/0206688 | A | |
| | | | | paragraph [0060], tables 1A-1D | | | |
| | | | | WO | 2019/041581 | A | |
| | | | | EP | 3470382 | A | |
| | | | | CN | 109422464 | A | |
| | | | | KR | 10-2019-0086588 | A | |
| JP | 2020-529378 | A | 08 October 2020 | US | 2021/0276916 | A | |
| | | | | table 1 | | | |
| | | | | WO | 2020/007159 | A | |
| | | | | EP | 3819270 | A | |
| | | | | CN | 108751728 | A | |
| | | | | KR | 10-2020-0004865 | A | |
| JP | 2018-517654 | A | 05 July 2018 | US | 2018/0179104 | A | |
| | | | | tables 1A-1C | | | |
| | | | | WO | 2016/165530 | A | |
| | | | | EP | 3406576 | A | |
| | | | | CN | 105753329 | A | |
| | | | | KR | 10-2018-0011786 | A | |
| JP | 2018-521944 | A | 09 August 2018 | US | 2018/0208497 | A | |
| | | | | tables 1A-1C | | | |
| | | | | WO | 2017/197933 | A2 | |
| | | | | EP | 3287423 | A | |
| | | | | CN | 108358460 | A | |
| | | | | KR | 10-2018-0096495 | A | |

Form PCT/ISA/210 (patent family annex) (January 2015)

**EP 4 317 097 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006057405 A1

- JP 6391875 B